# EUROPEAN PATENT APPLICATION

(11) **EP 1 898 188 A1**
(43) Date of publication of application: **12.03.2008**
(21) Application number: 07017530.2
(22) Date of filing: 07.09.2007
(51) Int. Cl.: G01F 23/26, G01F 25/00

(54) **Capacitance-type material level indication**

(30) Priority: 11.09.2006 US 518833
(71) Applicant: Venture Measurement company, Spartanburg SC 29306 (US)
(72) Inventor: Erazi, Orlando Alexi, Moore, SC 29369 (US)
(74) Representative: Mergel, Volker

(57) **Abstract**

A method of indicating level of material in a vessel includes coupling a probe to the vessel such that capacitance at the probe varies as a function of material level in the vessel. A periodic electrical signal at fixed frequency is applied to the probe such that operating characteristics of the signal vary as a function of capacitance at the probe. Material level is detected as a function of the operating characteristics of the signal. During a calibration mode of operation, the fixed frequency of the periodic electrical signal is varied to optimize sensitivity at the probe. In a preferred embodiment of the disclosure, this is carried out by applying the periodic electrical signal to the probe over a selected frequency range during the calibration mode of operation and identifying a frequency within this range at which the probe is most sensitive to changes in capacitance at the probe. The fixed frequency during a measurement mode of operation thereafter is set to this identified frequency.

## Description

The present disclosure relates to indication of material level in a storage vessel or the like as a function of the capacitance of the material within the vessel, and more particularly to calibration of a material level indication system to optimize sensitivity of the system to changes in material level.

### Background and Summary of the Disclosure

U.S. Patent 5,048,335 discloses a system for indicating the level of material in a vessel as a function of material capacitance. A probe is adapted to be coupled to the vessel so as to be responsive to variations in capacitance at the vessel as a function of material level. An electrical circuit is coupled to the probe such that operating characteristics of the circuit vary as a function of capacitance at the probe. A calibration circuit varies the operating characteristics of the electrical circuit during a calibration mode of operation for detecting a predetermined operating characteristic, corresponding to a predetermined material level condition in the vessel, and terminating the calibration operation when this predetermined operating characteristic is obtained. The electrical circuitry is disposed within a housing, and a flux-responsive switch is disposed within the housing for initiating the calibration mode of operation from outside of the housing and without opening the housing.

Although the system disclosed in the noted patent has enjoyed substantial commercial acceptance and success, further improvements remain desirable. For example, difficulties can be encountered when attempting to detect the level of materials, such as plastic pellets, having very low dielectric characteristics. A general object of the present disclosure is to provide a method of calibrating the material level indication system to optimize sensitivity at the probe to changes in material level and to provide an apparatus that is adapted to be calibrated by such method. In general this objective is carried out during a calibration mode of operation by varying the electrical frequency of the signal applied to the probe and thereafter operating during a measurement mode of operation at a frequency that optimizes sensitivity of the probe and system to changes in dielectric properties at the probe.

The present disclosure embodies a number of aspects that can be implemented separately from or in combination with each other.

A method of indicating level of material in a vessel, in accordance with one aspect of the present disclosure, includes coupling a probe to the vessel such that capacitance at the probe varies as a function of material level in the vessel. A periodic electrical signal at fixed frequency is applied to the probe such that operating characteristics of the signal vary as a function of capacitance at the probe. Material level is detected as a function of the operating characteristics of the signal. During a calibration mode of operation, the fixed frequency of the periodic electrical signal is varied to optimize sensitivity at the probe. In a preferred embodiment of the disclosure, this is carried out by applying the periodic electrical signal to the probe over a selected frequency range during the calibration mode of operation and identifying a frequency within this range at which the probe is most sensitive to changes in capacitance at the probe. The fixed frequency during the measurement mode of operation thereafter is set to this identified frequency.

### Brief Description of the Drawings

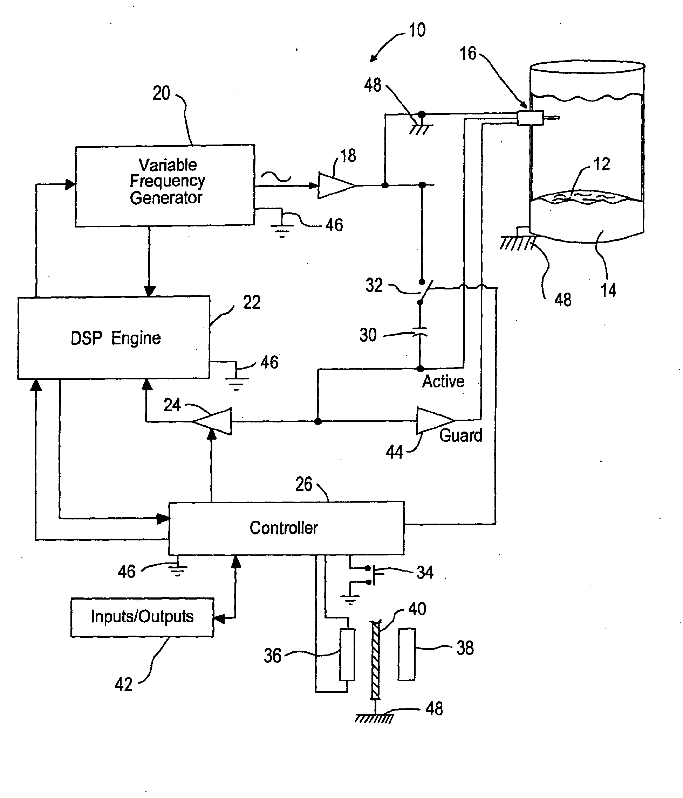

The disclosure, together with additional objects, features, advantages as aspects thereof, will best be understood from the following description, the appended claims and the accompanying drawing, which is a functional block diagram of an exemplary embodiment of a capacitance-type material level indicating system in accordance with the present disclosure.

### Detailed Description of Preferred Embodiments

The drawing illustrates a system 10 for detecting and indicating the level of material 12 in a vessel 14 in accordance with an exemplary embodiment of the present disclosure. System 10 includes a probe 16 adapted to be coupled to vessel 14 so as to be responsive to variations in capacitance at the vessel as a function of the level of material 12 in the vessel. A driver amplifier 18 is coupled to probe 16 for applying a periodic electrical signal to the probe. Driver 18 receives input from a variable frequency generator 20 for controlling the frequency of the signal applied to the probe. A DSP engine 22 controls operation of variable frequency generator 20 and receives input from the generator indicative of the frequency of the signal being applied to the probe. Probe 16 is also connected to an amplifier 24. Amplifier 24 preferably converts the current feedback from probe 16 to a voltage signal and applies this voltage signal at controlled variable gain to DSP engine 22. The gain or gains of amplifier 24 are controlled by a controller 26, which preferably takes the form of a programed microprocessor. DSP engine 22 receives a frequency control input from controller 26 and provides an output to controller 26 indicative of the admittance detected at probe 16.

A reference impedance 30, which may be a resistor, an inductor or, more preferably, a capacitor, is selectively connectable in parallel with probe 16 by means of a switch 32 that is controlled by controller 26. Controller 26 preferably receives input from a pushbutton 34 for initiating a calibration mode of operation, and from a switch 36 responsive to a flux generator 38 through the wall of housing 40 for initiating a calibration mode of operation without having to open the housing. Housing 40 may or may not be explosion-proof. Flux-repressive switch 36 may comprise a reed switch or a hall switch, for example, responsive to an external magnet flux generator 38, or may comprise a photo switch responsive to an external photo flux generator 38. Controller 26 also is connected to inputs/outputs 42 to receive inputs from remote circuitry, optionally including an input to initiate a calibration mode of operation, and/or to provide outputs that may include internal or external relays for indicating the level of material in the vessel, one or more LEDs visible through housing 40 for indicating the operating status of system 10, digital and/or analog connections to remote indication circuitry, etc. In the exemplary embodiment of the disclosure, driver 18 also is connected through an amplifier 44 to a guard shield on probe 16, although the use of a guard shield is by no means essential to the present disclosure.

During a measurement mode of operation, driver 18 applies a periodic signal at fixed frequency to probe 16, preferably a sinusoidal signal. The amplitude of this signal varies as a function of capacitance characteristics at probe 16, which in turn vary as a function of the level of material 12 in vessel 14. This signal is fed through amplifier 24 to DSP engine 22, which determines the apparent admittance at probe 16 and outputs this admittance signal to controller 26. This admittance signal preferably is an absolute value of the combination of the real and imaginary components of the signal returned from probe 16, although the real and imaginary components could be fed separately to controller 26. Controller 26 monitors the admittance signal from DSP engine 22 to determine the level of material 12 within vessel 16. This level determination can be a point-level determination when material 12 contacts probe 16, or can be a continuous level determination - i.e., a level determination as a continuous function of the level of the material relative to the probe. It will be appreciated, of course, that although DSP engine 22 and controller 26 are illustrated as separate components in the drawing, these components could readily be combined.

A calibration mode of operation can be initiated by pushbutton 34 with the cover of the housing removed by a technician or the like to set-up or repair system 10, or can be initiated by bringing magnet 3 8 into external proximity with switch 36 without having to open the housing. The calibration mode of operation preferably is initiated with material 12 spaced from probe 16 so that probe 16 effectively is exposed to an empty vessel. The calibration mode of operation in the exemplary embodiment of the disclosure involves three stages: (1) setting the gains at amplifier 24, (2) determining the calibration frequency range of variable frequency generator 20, and (3) determining the fixed frequency at which generator 20 will operate following the calibration mode of operation. Gains at amplifier 24 are set by controller 26 by operating generator 20 at a predetermined fixed frequency and varying the gains at amplifier 24 to maximize the apparent admittance at the probe. In an exemplary embodiment of the disclosure, for example, the gains at amplifier 24 can be set to maximize the admittance signal at a frequency of 30KHz, for example. With the gains at stage 24 so set, generator 20 is then operated at two (or more) preselected frequencies to determine the admittance versus frequency characteristic at probe 16. It has been found that such admittance versus frequency characteristic at probe 16 generally is linear at least between 15KHz and 20KHz, for example. Thus, by selectively operating generator 20 at these two frequencies and monitoring the return signal from the probe, the corresponding admittance values are employed at controller 26 to establish a linear relationship of admittance versus frequency.

Controller 26 then determines the upper and lower values of the calibration frequency range as a function of this linear relationship and preselected admittance values. In an exemplary embodiment of the disclosure, these admittance values are empirically determined. In one example, these admittance values are 8Kmhos and 10Kmhos. Using these empirically determined admittance values and the previously determined relationship of admittance versus frequency, upper and lower limits of the calibration frequency range are determined. In an exemplary embodiment of the disclosure, the total available calibration frequency range may be between 30KHz and 100KHz, for example. Applying the preselected admittance values to the determined relationship of admittance versus frequency, a calibration frequency range of 35KHz to 45KHz may be identified, for example. Variable frequency controller 20 is then controlled by controller 26 through DSP engine 22 to apply periodic electrical signal to probe 16 through driver 18 at discrete frequencies within this frequency range, such as in increasing steps of 1KHz or 2KHz from 35KHz to 45 KHz in this example. At each frequency step, the admittance at probe 16 is determined both with switch 32 open and with switch 32 closed so as to connect reference impedance 30 in parallel with probe 16. Reference impedance 30 may have a value corresponding to the desired minimum sensitivity at the probe, such as two picofarads for example. In one exemplary implementation of the disclosure, this value has been selected as corresponding to the change in capacitance at probe 16 when material 12 consisting of light plastic pellets reaches the level of the probe. Other impedance values can be employed. A number of impedances 30 and associated switches 32 can be employed for controlled connection in parallel with probe 16 by controller 26 for different sensitivities, if desired. The desired sensitivity could be input to controller 26 through inputs/outputs 42.

At each incremental frequency during the calibration mode of operation, the admittance return signal is monitored by DSP engine 22 and controller 26 both with and without connection of reference impedance 30 in parallel with the probe. An operating frequency is selected, preferably the frequency at which the admittance difference is greatest with reference impedance 30 connected and disconnected from the circuit. That is, the system operating frequency is selected during the calibration mode of operation as the calibration frequency at which the difference is greatest between the output of amplifier 24 with probe 16 alone and the output of amplifier 24 with impedance 30 connected in parallel with probe 16. Controller 36 and DSP engine 22 then set variable frequency generator 20 to operate at this frequency until the next calibration mode operation is initiated. The calibration operation discussed above preferably is controlled by suitable software stored in controller 26.

If desired, calibration can be monitored as disclosed in US-A 5,088,325.

As shown in the drawing, generator 20, DSP engine 22 and controller 26 are referenced (connected) to circuit ground 46. Housing 40 preferably is mounted on vessel 14 and connected to earth ground 48 through vessel 14. Circuit ground 46 preferably is isolated from earth ground 48, and the output of driver 18 preferably is fed to probe 16 through earth ground 48. This feature, which is preferred but optional, simplifies the design and cost of the power supply for the system.

Summarizing it has been described a method of indicating level of material in a vessel includes coupling a probe to the vessel such that capacitance at the probe varies as a function of material level in the vessel. A periodic electrical signal at fixed frequency is applied to the probe such that operating characteristics of the signal vary as a function of capacitance at the probe. Material level is detected as a function of the operating characteristics of the signal. During a calibration mode of operation, the fixed frequency of the periodic electrical signal is varied to optimize sensitivity at the probe. In a preferred embodiment of the disclosure, this is carried out by applying the periodic electrical signal to the probe over a selected frequency range during the calibration mode of operation and identifying a frequency within this range at which the probe is most sensitive to changes in capacitance at the probe. The fixed frequency during a measurement mode of operation thereafter is set to this identified frequency.

There thus have been disclosed a method and system for indicating level of material in a vessel that fully satisfy all of the objects and aims previously set forth. The disclosure has been presented in conjunction with an exemplary embodiment, and a number of modifications and variations have been discussed. Other modifications and variations readily will suggest themselves to persons of ordinary skill in the art in view of the foregoing description. The disclosure is intended to embrace all such modifications and variations as fall within the spirit and broad scope of the appended claims.

## Claims

1. A method of indicating level of material in a vessel, which includes the steps of:
(a) coupling a probe to the vessel such that capacitance at said probe varies as a function of material level in the vessel,
(b) applying a periodic electrical signal at fixed frequency to said probe such that operating characteristics of said signal vary as a function of capacitance at said probe,
(c) detecting material level in the vessel as a function of operating characteristics of said signal, and
(d) during a calibration mode of operation, varying said fixed frequency of said periodic electrical signal.

2. The method set forth in claim 1 wherein said step (d) includes:
(d1) initiating a calibration mode of operation,
(d2) applying said periodic electrical signal to said probe over a selected frequency range,
(d3) identifying a frequency within said range at which said probe is most sensitive to changes in capacitance at said probe, and
(d4) setting said fixed frequency of said periodic signal in said step (b) at a frequency identified in said step (d3).

3. The method set forth in claim 2 wherein said step (d3) includes:
(d3a) applying said periodic electrical signal in said step (d2) at a series of discrete frequencies within said range,
(d3b) at each frequency within said step (d3a), switching a reference impedance into and out of parallel connection with said probe, and
(d3c) identifying a discrete frequency within said range at which operating characteristics at said probe are most affected by said step (d3b).

4. The method set forth in claim 2 or 3 wherein said step (d) further includes:
(d5) applying said periodic electrical signal to said probe at first and second preselected fixed frequencies, and
(d6) selecting said frequency range in said step (d2) as a function of operating characteristics at said probe at said first and second preselected fixed frequencies in said step (d5).

5. The method set forth in claim 4 wherein said step (d6) includes:
(d6a) determining a characteristic of admittance versus frequency at said probe based upon operating characteristics of said probe at said first and second selected frequencies in said step (d5), and
(d6b) determining lower and upper frequencies of said selected frequency range in said step (d2) as a function of said admittance versus frequency characteristic determined in said step (d6a).

6. The method set forth in claim 5 wherein said step (d6b) includes selecting said lower and upper frequencies as frequencies that correspond to preselected admittances as said probe.

7. A system for indicating level of material in a vessel as a function of material capacitance, which includes:
a probe adapted to be coupled to a vessel so as to be responsive to variations in capacitance at the vessel as a function of variations in level of material in the vessel, a driver coupled to said probe for applying a periodic electrical signal to said probe, an electrical circuit responsive to operating characteristics at said probe to indicate material level with respect to said probe as a function of electrical operating characteristics at said probe, and
a frequency generator coupled to said driver for varying frequency of said periodic electrical signal during a calibration mode of operation.

8. The system set forth in claim 7 wherein said electrical circuit includes:
means for initiating a calibration mode of operation,
a controller coupled to said frequency generator to apply to said probe a periodic electrical signal over a selected frequency range, and
means for identifying a frequency within said range at which said probe is most responsive to changes in level of material at the vessel.

9. The system set forth in claim 8 wherein said means for identifying a frequency includes a reference capacitor and a switch responsive to said controller for selectively connecting said reference capacitor in parallel with said probe.

10. The system set forth in claim 9 wherein said controller operates said frequency generator to apply said periodic electrical signal to said probe at discrete frequencies during said calibration mode of operation, and wherein said means for identifying a frequency identifies a one of said discrete frequencies at which operating characteristics at said probe vary by the greatest amount with said reference capacitor connected and disconnected in parallel with said probe.

11. The system set forth in one of claims 8 to 10 wherein said controller includes means for selecting said frequency range as a function of operating characteristics at said probe at first and second predetermined frequencies at said driver.

12. The system set forth in one of claims 7 to 11 wherein said electrical circuit and said frequency generator are connected to circuit ground, wherein circuit ground is isolated from earth ground, and wherein said driver applies said electrical signal to said probe through earth ground.

13. A system for indicating level of material in a vessel, which includes:
a probe adapted to be coupled to a vessel so as to be responsive to variations in level of material in the vessel,
a driver coupled to said probe for applying a periodic electrical signal to said probe, and
an electrical circuit responsive to operating characteristics at said probe to indicate material level in the vessel with respect to said probe,
said electrical circuit being coupled to circuit ground, said circuit ground being isolated from earth ground, said driver applying said electrical signal to said probe through earth ground.

14. The system set forth in claim 13 including a housing, in which said driver and said electrical circuit are disposed, connected to earth ground.

15. The system set forth in claim 14 wherein said housing is adapted to be mounted on the vessel, which is connected to earth ground.
